# EUROPEAN PATENT APPLICATION

(11) **EP 2 674 812 A1**
(43) Date of publication of application: **18.12.2013**
(21) Application number: 13165403.0
(22) Date of filing: 25.04.2013
(51) Int. Cl.: G03B 21/14, G03B 21/16, H04N 9/31

(54) **Image projection apparatus**

(30) Priority: 11.06.2012 JP 2012131942
(71) Applicant: Ricoh Company, Ltd., Tokyo 143-8555 (JP)
(72) Inventor: Yamada, Masamichi, Ohta-ku, Tokyo 143-8555 (JP)
(74) Representative: Leeming, John Gerard

(57) **Abstract**

An image projection apparatus (1) includes a light source (4) which emits light, an image forming unit (10) which forms an image with the emitted light, a projection optical unit (31) which is provided on an outer surface of the image projection apparatus (1) closest to an external projection plane, and which projects the formed image onto the external projection plane as projection light, a bottom surface (101) which is fixed to an external installation site to be substantially parallel thereto, and an external connection unit (11) which is provided on the outer surface of the image projection apparatus (1) closest to the external projection plane, on the same side as the bottom surface (101) across a virtual horizontal plane passing through the center of the projection optical unit (31), and which is configured to be connected to a connection line for connection with an external device.

## Description

### BACKGROUND

### Technical Field

The present invention relates to an image projection apparatus.

### Related Art

According to a typical image projection apparatus, an image is formed by an image forming unit with light emitted from a light source on the basis of image data transmitted from, for example, a personal computer or a video camera, and is projected and displayed on a projection plane, such as a screen.

It is desirable that the image projection apparatus is capable of projecting the image on a wide screen (i.e., responding to an increase in size of the projection plane) with the maximum possible reduction in projection space outside the image projection apparatus used for projection. Herein, projection space refers to the space through which light is projected from the image projection apparatus and directed onto the projection plane. The projection space may be reduced by a reduction in projection distance between the image projection apparatus and the projection plane. The image projection apparatus is, however, placed at a certain projection distance from the projection plane so as to obtain the desired image size formed by the projection light projected from a projection optical unit of the image projection apparatus.

At present, with the improved performance of the projection optical unit, image projection apparatuses capable of projecting the image on a projection plane corresponding to a screen size of 60 inches to 80 inches at a projection distance of approximately 1 m to approximately 2 m have become common.

In a typical use environment of the image projection apparatus, the image projection apparatus is placed on a stand disposed in front of the projection plane, such as a screen. When used in a conference room or the like, the image projection apparatus may be placed on a long table serving as a stand, with the long axis of the table perpendicular to the projection plane and with viewers seated around the long table.

If the above-described image projection apparatus of recent years with a relatively short projection distance is used on such a long table, it is possible to place the image projection apparatus near the front end of the table (i.e., an end of the table closest to the projection plane), thereby freeing up space on the table and behind the image projection apparatus (i.e., opposite to the projection plane across the image projection apparatus).

### SUMMARY

The present invention describes a novel image projection apparatus that, in one example, includes a light source, an image forming unit, a projection optical unit, a bottom surface, and an external connection unit. The light source emits light. The image forming unit forms an image with the emitted light. The projection optical unit is provided on an outer surface of the image projection apparatus closest to an external projection plane, and projects the formed image onto the external projection plane as projection light. The bottom surface is fixed to an external installation site to be substantially parallel thereto. The external connection unit is provided on the outer surface of the image projection apparatus closest to the external projection plane, on the same side as the bottom surface across a virtual horizontal plane passing through the center of the projection optical unit, and configured to be connected to a connection line for connection with an external device.

The image projection apparatus is, for example, a projector. The light source is, for example, a light source device. The image forming unit is, for example, an image display mechanism. The projection optical unit is, for example, projection lenses. The bottom surface is, for example, a bottom surface of the projector. The external connection unit is, for example, an input-output connector unit.

The image projection apparatus further preferably includes a circuit board including the external connection unit and disposed substantially parallel to the virtual horizontal plane. The circuit board is, for example, a printed circuit board.

The image projection apparatus further preferably includes a dividing member configured to divide the internal space of the image projection apparatus into first and second compartments substantially parallel to the virtual horizontal plane, with the circuit board disposed in the first compartment, and with the light source, the image forming unit, and the projection optical unit disposed in the second compartment. The dividing member is, for example, a base housing.

The image projection apparatus further preferably includes an intake device configured to take outside air into the first compartment and an exhaust device configured to exhaust air from the second compartment to the outside of the image projection apparatus, and the dividing member further preferably includes a ventilation opening formed in the vicinity of the light source to allow air to flow from the first compartment to the second compartment. The intake device is, for example, a left intake section and a right intake section. The exhaust device is, for example, ventilation fans and an exhaust section. The ventilation opening is, for example, a left ventilation section and a right ventilation section.

### BRIEF DESCRIPTION OF THE DRAWINGS

A more complete appreciation of the invention and many of the advantages thereof are obtained as the same becomes better understood by reference to the following detailed description when considered in connection with the accompanying drawings, wherein:
FIGS. 1A and 1B are external views of a projector according to an embodiment of the present invention, FIG. 1A being a perspective view of the projector, and FIG. 1B being a side view of the projector;
FIGS. 2A and 2B are explanatory diagrams of an optical device and a light source device of the projector, FIG. 2A being a perspective view of the projector with an upper outer cover thereof removed, and FIG. 2B being a perspective view of the optical device and the light source device;
FIG. 3 is a top cross-sectional view of the optical device and the light source device;
FIG. 4 is a front view of the projector;
FIGS. 5A and 5B are explanatory diagrams each illustrating a use environment of a projector, FIG. 5A illustrating a comparative example using a projector including an input-output connector unit provided on a rear surface thereof, and FIG. 5B illustrating an example using the projector according to the present embodiment;
FIG. 6 is a side cross-sectional view of the projector according to the present embodiment;
FIG. 7 is a top view for describing an exhaust direction of the projector;
FIGS. 8A and 8B are explanatory perspective views of the interior of the projector, FIG. 8A being an upper perspective view of the projector with the upper outer cover thereof removed, and FIG. 8B being a lower perspective view of the projector with the upper outer cover and a lower outer cover thereof removed;
FIG. 9 is an explanatory diagram illustrating attachment of the optical device, the light source device, and a printed circuit board to a base housing;
FIGS. 10A and 10B are perspective views of the base housing on the left side of the projector, FIG. 10A being a perspective view of the base housing as viewed from above, and FIG. 10B being an enlarged perspective view of a portion of the base housing including a circled area of FIG. 10A as viewed obliquely from below;
FIGS. 11A and 11B are perspective views of the base housing on the right side of the projector, FIG. 11A being a perspective view of the base housing as viewed from above, and FIG. 11B being an enlarged perspective view of a portion of the base housing including a circled area of FIG. 11A as viewed obliquely from below;
FIGS. 12A and 12B are perspective views of the projector attached with the upper and lower outer covers, FIG. 12A being a perspective view of the rear side of the projector, and FIG. 12B being a perspective view of the front side of the projector; and
FIGS. 13A and 13B are perspective views of the projector with the upper outer cover, the optical device, and the light source device removed, FIG. 13A being a perspective view of the rear side of the projector, and FIG. 13B being a perspective view of the front side of the projector.

### DETAILED DESCRIPTION

In describing the embodiments illustrated in the drawings, specific terminology is adopted for the purpose of clarity. However, the disclosure of the present invention is not intended to be limited to the specific terminology so used, and it is to be understood that substitutions for each specific element can include any technical equivalents that have the same function, operate in a similar manner, and achieve a similar result.

Referring now to the drawings, wherein like reference numerals designate identical or corresponding parts throughout the several views, description will be given of a projector 1 serving as an image projection apparatus according to an embodiment of the present invention (hereinafter simply referred to as the projector 1). Throughout the drawings, arrows X, Y, and Z indicate three mutually orthogonal directions.

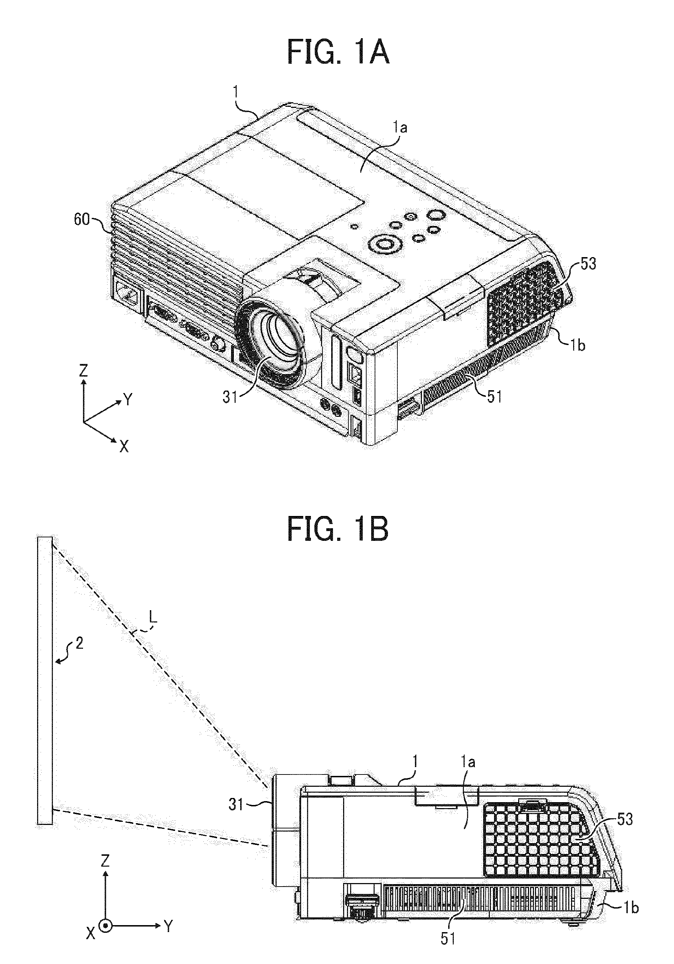

FIGS. 1A and 1B are external views of the projector 1 according to the present embodiment. FIG. 1A is a perspective view of the projector 1, and FIG. 1B is a side view of the projector 1. FIG. 1A illustrates an upper outer cover 1a, a lower outer cover 1b, projection lenses 31 forming a projection optical unit, an exhaust section 60, a left intake section 51, and an upper intake section 53. FIG. 1B illustrates a state in which a screen 2 serving as a projection plane is irradiated with projection light L emitted from the projection lenses 31 of the projector 1.

Hereinafter, a surface of the projector 1 provided with the left intake section 51 will be referred to as the left side of the projector 1, and a surface of the projector 1 opposite thereto will be referred to as the right side of the projector 1. Further, a surface of the projector 1 provided with the projection lenses 31 will be referred to as the projection surface of the projector 1, and a surface of the projector 1 opposite thereto will be referred to as the rear surface of the projector 1.

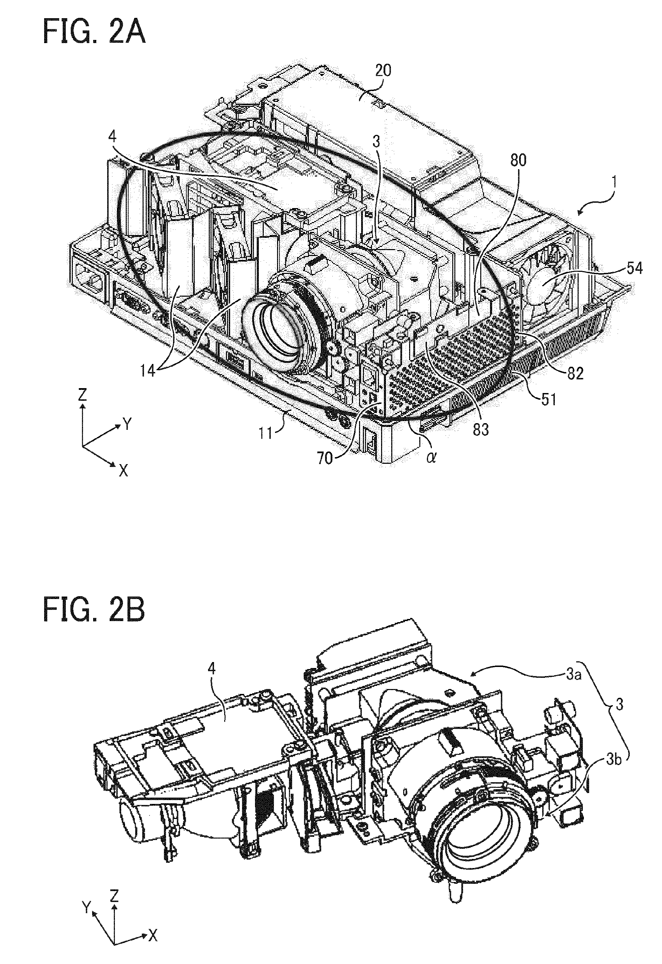

FIGS. 2A and 2B are explanatory diagrams of an optical device 3 and a light source device 4 included in the projector 1. FIG. 2A is a perspective view of the projector 1, in which the upper outer cover 1a illustrated in FIG. 1A is removed. An input-output connector unit 11, ventilation fans 14, an upper intake fan 54, a power supply substrate 20, and a network substrate 80 including an electromagnetic shielding member 82 and an antenna unit 83 illustrated in FIG. 2A will be described later. FIG. 2B is a perspective view of the optical device 3 and the light source device 4 disposed in an area α of FIG. 2A. As illustrated in FIG. 2B, the optical device 3 includes an illumination mechanism 3a and a projection mechanism 3b.

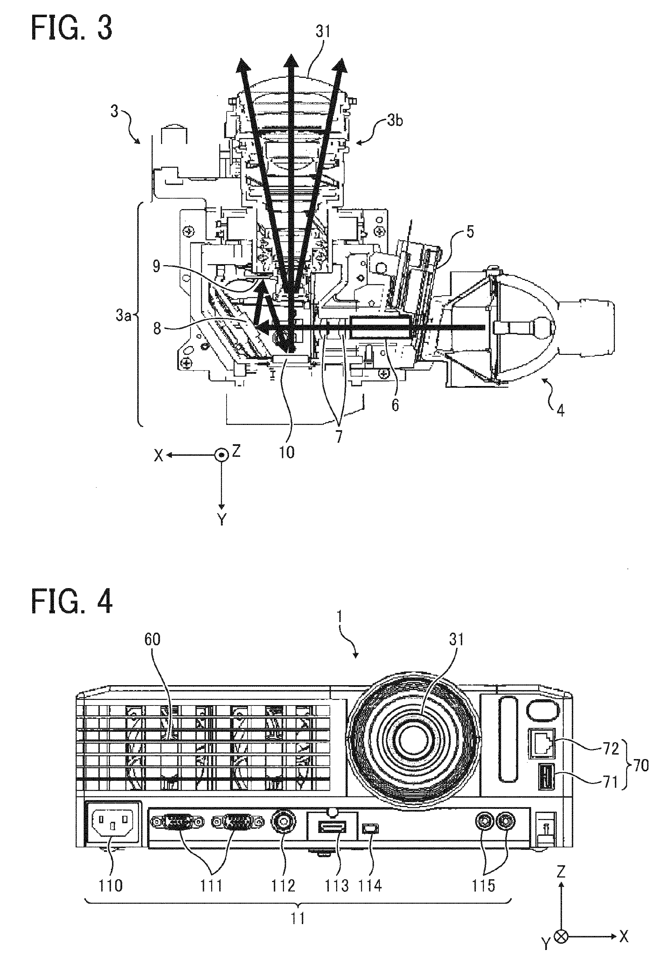

FIG. 3 is a top cross-sectional view (i.e., an X-Y cross-sectional view) of the optical device 3 and the light source device 4, illustrating a detailed configuration of the optical device 3. As illustrated in FIG. 3, the optical device 3 includes a color wheel 5, a light tunnel 6, relay lenses 7, a plane mirror 8, a concave mirror 9, and an image display mechanism 10.

The color wheel 5 having a disc shape converts white light radiated from the light source device 4 into light that changes in color between R (red), G (green), and B (blue) at unit time intervals, and emits the converted light to the light tunnel 6. The light tunnel 6 is a cylindrical member formed by glass sheets joined together to guide the light emitted from the color wheel 5 to the relay lenses 7. The relay lenses 7 are two lenses used in combination that condense the light emitted from the light tunnel 6 while correcting axial chromatic aberration. The plane mirror 8 and the concave mirror 9 are members which reflect the light emitted from the relay lenses 7 and guide and condense the light to the image display mechanism 10. The image display mechanism 10 serving as an image forming unit includes a DMD (digital micro-mirror device, a registered trademark of Texas Instruments Incorporated) having a substantially rectangular mirror surface including multiple micro-mirrors. With the micro-mirrors driven in a time-division manner on the basis of video data, the DMD processes and reflects projection light to form a predetermined video.

The projector 1 of the present embodiment employs a high-pressure mercury lamp as a light source included in the light source device 4. The light source device 4 radiates white light to the illumination mechanism 3a of the optical device 3. In the illumination mechanism 3a, the white light radiated from the light source device 4 is separated into RGB light beams and guided to the image display mechanism 10, and an image is formed by the image display mechanism 10 in accordance with modulated signals. The image is then projected by the projection mechanism 3b.

At a position vertically above the image display mechanism 10, i.e., on the proximal side of the image display mechanism 10 in FIG. 3, a not-illustrated OFF light plate is provided which receives unnecessary light included in the light incident on the image display mechanism 10 and not to be used for the projection light L. When light is incident on the image display mechanism 10, the DMD operates with the multiple micro-mirrors thereof driven to operate in a time-division manner on the basis of video data. With the operation of the micro-mirrors, the light to be used is reflected onto the projection lenses 31, and the light not to be used is reflected onto the OFF light plate. In the image display mechanism 10, the light to be used for a projected image is reflected onto the projection mechanism 3b, and passes through the projection lenses 31 to be enlarged. The enlarged video light is then projected on the screen 2, as illustrated in FIG. 1B.

FIG. 4 is a front view of the projector 1, as viewed from the side of the front surface (i.e., projection surface) of the projector 1 corresponding to an outer surface of the projector 1 closest to the screen 2. The projector 1 of the present embodiment includes, below the projection lenses 31, an input-output connector unit 11 including multiple interfaces, such as a power input unit 110, analog data input units 111, a video RCA (Radio Corporation of America, a registered trademark of Thomson S.A.) terminal 112, an HDMI (high-definition multimedia interface) terminal 113, a USB (universal serial bus) terminal 114, and stereo mini jacks 115. The input-output connector unit 11 serves as an external connection unit. The power input unit 110 is, for example, an AC (alternate-current) inlet for power input. Each of the analog data input units 111 is, for example, a so-called D-Sub (subminiature) 15 terminal for input and output of analog data with an external device, such as a personal computer. The video RCA terminal 112 is a video input terminal. The HDMI terminal 113 and the USB terminal 114 communicate video and audio digital signals. The stereo mini jacks 115 are terminals for audio input and output. The projector 1 further includes, on the X-direction side of the projection lenses 31, a side connector unit 70 including a LAN (local area network) connector unit 72 and a second USB terminal 71.

The projector 1 is an apparatus which generates video on the basis of video data input from, for example, a personal computer or a video camera, and projects and displays the video on a projection plane, such as the screen 2. Liquid crystal projectors used as image projection apparatuses, such as the projector 1, have been improved in brightness and lowered in price owing to the improvement in resolution of liquid crystal display panels and the increase in efficiency of light source lamps. Further, with the spread of small, light image projection apparatuses using the above-described DMD, image projection apparatuses have been widely used not only in offices and schools but also at home. In particular, front-type image projection apparatuses which project the image from the front surface thereof have been improved in portability and used in small meetings of a few people.

As described above, in a typical use environment of the image projection apparatus, the image projection apparatus is placed on a stand disposed in front of the projection plane, such as a screen. Further, when used in a in a conference room or the like, the image projection apparatus may be placed on a long table serving as the stand, with the long axis of the table perpendicular to the projection plane and with viewers seated around the long table. If the image projection apparatus placed on the table has a relatively long projection distance, the table is disposed near the projection plane, and the image projection apparatus is placed on the table at a position distant from the projection plane, in order to maintain an appropriate projection distance without increasing the distance between the viewers and the projection plane. In such a use environment, there is an open space on the table and between the image projection apparatus and the projection plane. If any object is placed in the space, or if any activity takes place in the space, the projection light from the image projection apparatus is blocked, disturbing the image on the projection plane. Therefore, the space on the table is unable to be freely used.

Unlike the above-described image projection apparatus with a relatively long projection distance, an image projection apparatus with a relatively short projection distance, such as an image projection apparatus capable of projecting the image on a projection plane corresponding to a screen size of 60 inches to 80 inches at a projection distance of approximately 1 m to approximately 2 m, is placeable near the front end of the table (i.e., an end of the table closest to the projection plane), allowing a space on the table and behind the image projection apparatus (i.e., opposite to the projection plane across the image projection apparatus) to be freely used.

A rear surface or a right or left side of the image projection apparatus, however, usually includes an external connection unit for connection to a power supply and input and output of image information and so forth with an external device. Therefore, cables and so forth connected to the external connection unit are scattered on the long table, reducing the freely usable space on the table.

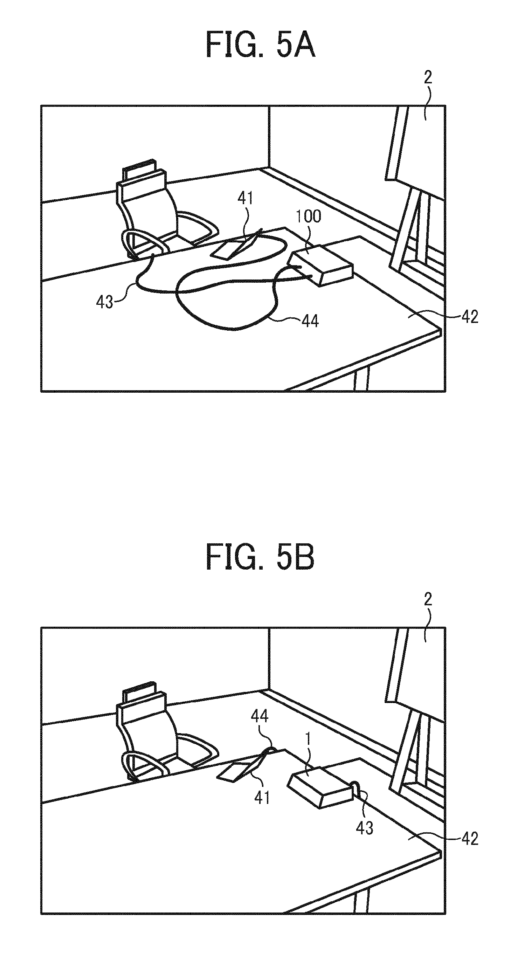

FIGS. 5A and 5B are explanatory diagrams each illustrating a use environment of a projector, in which the projector and a personal computer 41 are placed on a meeting table 42 disposed in front of the screen 2. The meeting table 42 (i.e., a long table) serves as a stand, i.e., an external installation site at which the projector is placed. FIG. 5A is an explanatory diagram illustrating a comparative example using a projector 100 including an input-output connector unit on the rear surface thereof. FIG. 5B is an explanatory diagram illustrating an example using the projector 1 of the present embodiment.

As illustrated in FIG. 5A, in the comparative example using the projector 100 including an input-output connector unit on the rear surface thereof, a signal cable 44 connected to the personal computer 41 and a power cable 43 (i.e., connection lines for connection with an external device) are scattered on the meeting table 42.

By contrast, in the projector 1 of the present embodiment, the input-output connector unit 11 is located below the projection lenses 31 provided on the front surface (i.e., projection surface) of the projector 1, as illustrated in FIG. 4. With this configuration, when the projector 1 is placed on a front end portion of the meeting table 42, i.e., an end portion of the meeting table 42 closest to the screen 2 and separated from the screen 2 by approximately 1 m to approximately 2 m, cables connected to the input-output connector unit 11, such as the signal cable 44 and the power cable 43, are allowed to hang downward from the front end of the meeting table 42, as illustrated in FIG. 5B. Accordingly, the cables are not scattered around the projector 1 on the meeting table 42, making it possible to effectively use the space on the meeting table 42. That is, according to the present embodiment, when the projector 1 (i.e., the image projection apparatus) is placed on a stand, the cables (i.e., connection lines) do not block the projection light directed to the projection plane, making it possible to effectively use the space around the projector 1 and on the stand.

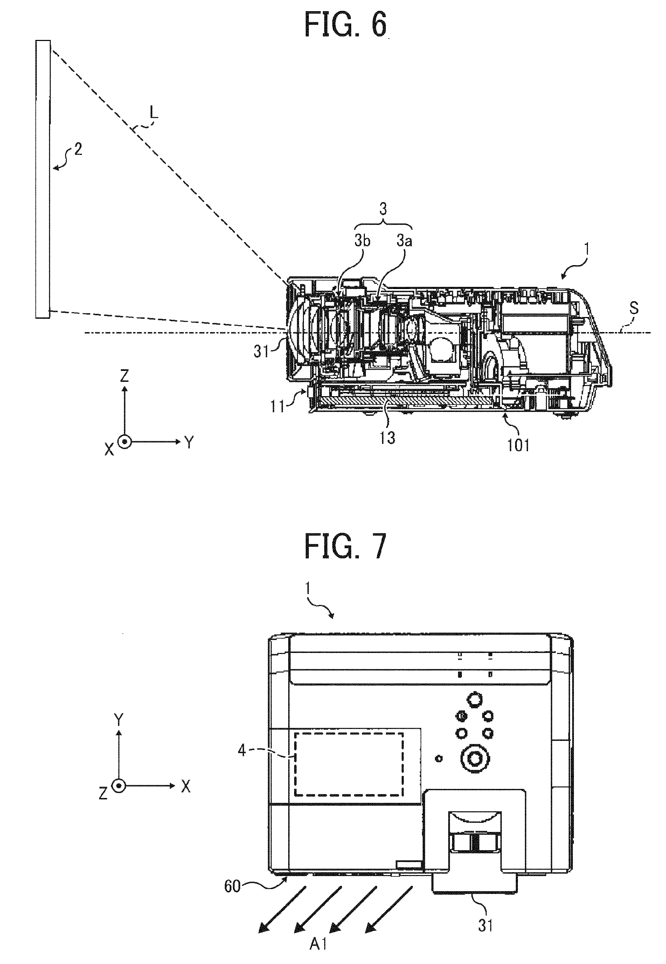

FIG. 6 is a side cross-sectional view of the projector 1 projecting the image, as viewed from the right side of FIG. 4, i.e., from the left side of the projector 1. FIG. 6 illustrates a printed circuit board 13 holding the input-output connector unit 11, a bottom surface 101 of the projector 1, and a lens center horizontal plane S (i.e., a virtual horizontal plane) passing through the center of the projection lenses 31. As illustrated in FIG. 6, the printed circuit board 13 is disposed substantially parallel to the lens center horizontal plane S and on the side of the bottom surface 101 (i.e., the lower side of FIG. 6) opposite to the side provided with the screen 2 (i.e., the upper side of FIG. 6) across the lens center horizontal plane S. With this configuration, the input-output connector unit 11 is disposed at a position lower than the projection lenses 31 on the projection surface of the projector 1, at which the screen 2 is not located. Accordingly, the cables connected to the input-output connector unit 11 hang downward in a direction separating from the projection lenses 31, and thus are prevented from disturbing the projected image.

FIG. 7 is a top view for describing an exhaust direction of the projector 1. On the projection surface of the projector 1, the exhaust section 60 (i.e., an exhaust device) is disposed on the left side of the projection lenses 31 in FIG. 7. The exhaust section 60 is configured to exhaust air diagonally to the front of the projector 1, as indicated by arrows A1 in FIG. 7.

As described above, in a typical use environment of the image projection apparatus with a relatively short projection distance, such as the projector 1, the image projection apparatus is placed near an end of the meeting table 42 closest to the screen 2, and people are present around the image projection apparatus except for the projection surface thereof. Usually, people are not present on the projection surface side to avoid disturbing the projected image. Further, the air exhausted from the image projection apparatus is relatively high in temperature, and people are likely to feel uncomfortable when making direct contact with the exhausted air. For these reasons, image projection apparatuses configured to exhaust air to the front of the projection surface, such as the projector 1 illustrated in FIG. 7, have been increasingly developed.

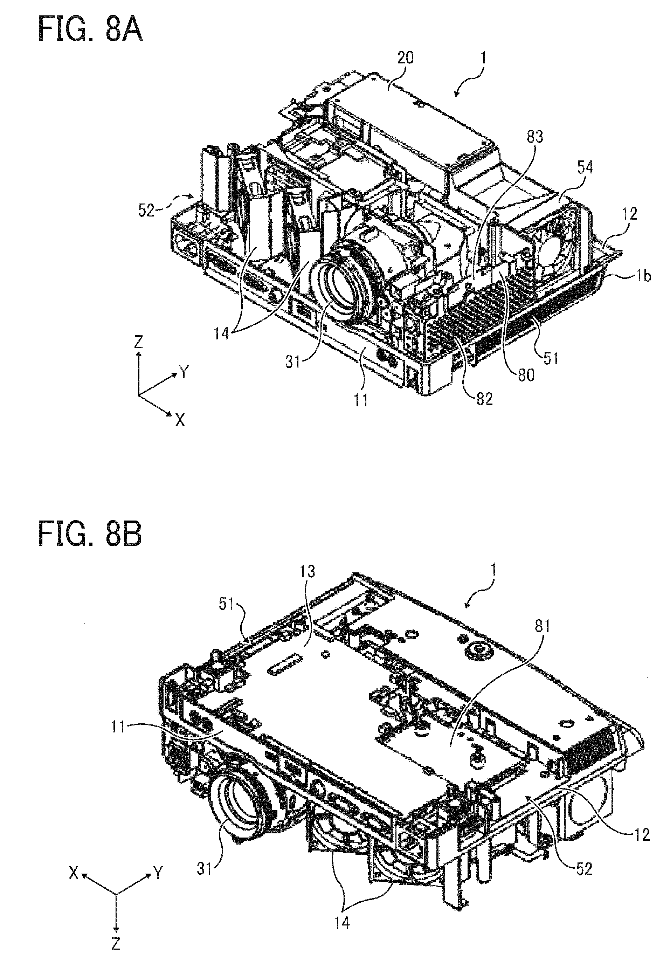

In the projector 1 of the present embodiment thus configured to exhaust air to the front of the projection surface and have the input-output connector unit 11 provided on the projection surface, the distance between the printed circuit board 13 holding the input-output connector unit 11 and the exhaust section 60 exhausting air of relatively high temperature is reduced. This configuration therefore may increase the temperature of the printed circuit board 13 and cause a failure thereof. To prevent such a failure, the projector 1 is configured to include a base housing 12 illustrated in FIGS. 8A and 8B, which serves as a dividing member that substantially horizontally divides the internal space of the projector 1 into two compartments.

FIGS. 8A and 8B are explanatory perspective views of the interior of the projector 1. FIG. 8A is an upper perspective view of the projector 1, in which the upper outer cover 1a illustrated in FIGS. 1A and 1B is removed. FIG. 8B is a lower perspective view of the projector 1, in which the upper outer cover 1a and the lower outer cover 1b illustrated in FIGS. 1A and 1B are removed. As illustrated in FIGS. 8A and 8B, the base housing 12 serves as a member substantially vertically holding a variety of internal modules, and also as a dividing member. The projector 1 has a two-story structure divided by the base housing 12. The base housing 12 holds the optical device 3 and the light source device 4 in a second-story portion thereof, and holds the printed circuit board 13 in a first-story portion thereof. A right intake section 52 and a light source holding portion 81 illustrated in FIGS. 8A and 8B will be described later.

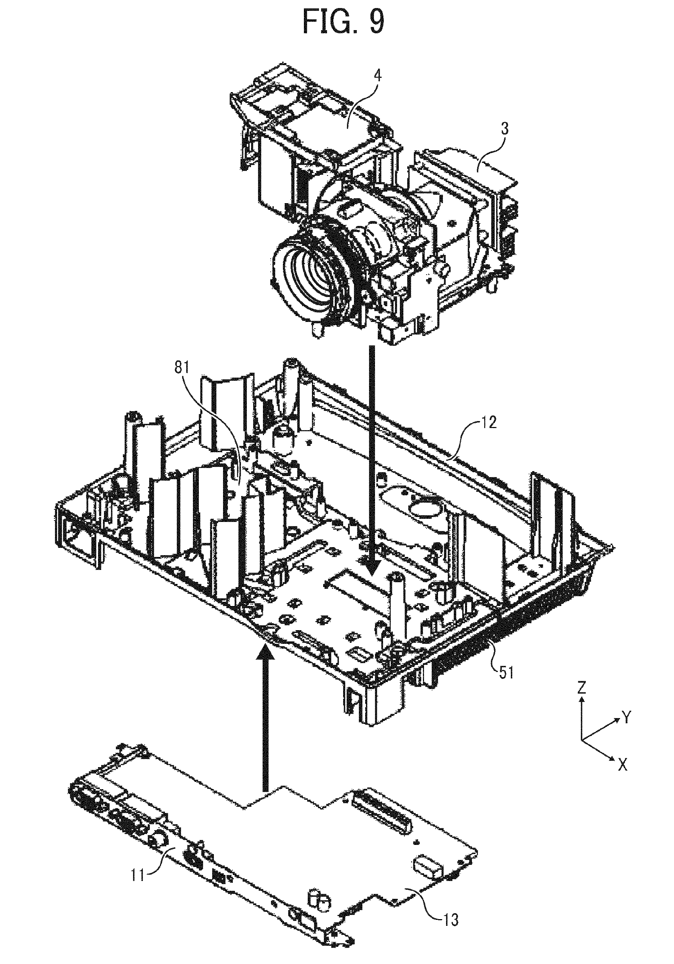

FIG. 9 is an explanatory diagram illustrating attachment of the optical device 3, the light source device 4, and the printed circuit board 13 to the base housing 12. In the two-story structure divided by the base housing 12, the optical device 3 and the light source device 4 are downwardly mounted on the second-story portion of the base housing 12, and the printed circuit board 13 is upwardly mounted on the first-story portion of the base housing 12, as illustrated in FIG. 9. This configuration simplifies the assembly process.

Further, the base housing 12 functioning as a dividing member is present between the printed circuit board 13 and the light source device 4 acting as a heat source and the optical device 3. Accordingly, the base housing 12 shields the printed circuit board 13 from radiant heat from the heat source.

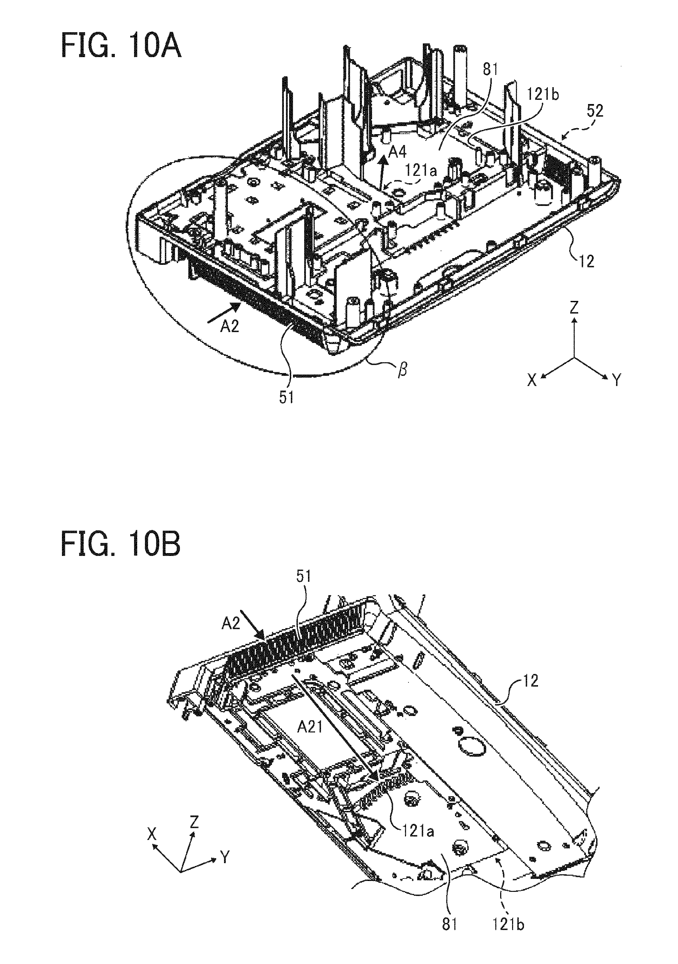

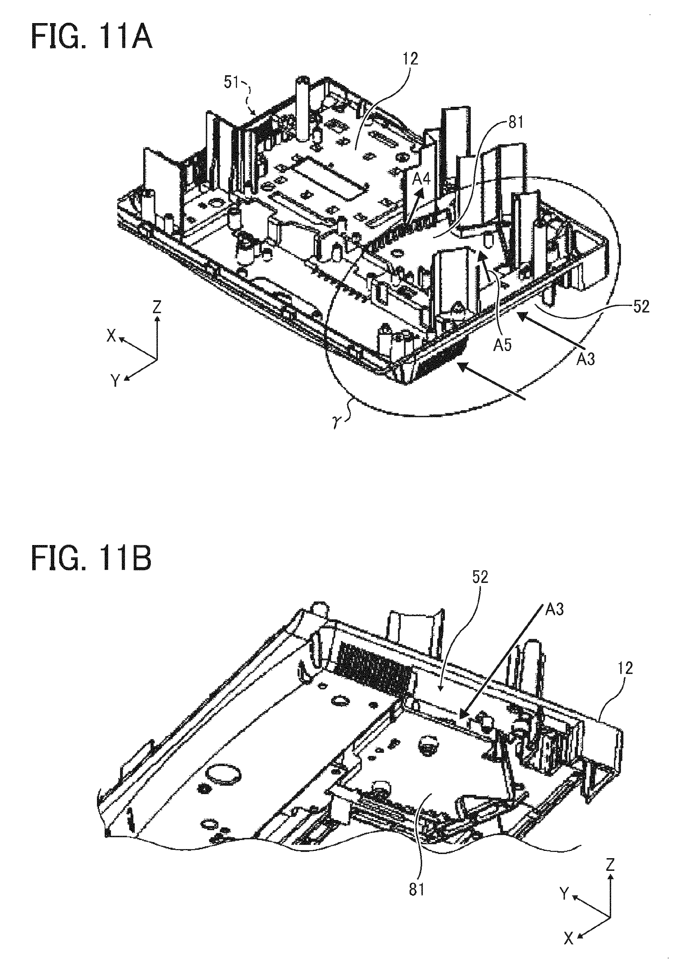

FIGS. 10A and 10B and FIGS. 11A and 11B are diagrams illustrating a detailed shape of the base housing 12, specifically illustrating airflows. FIGS. 10A and 10B are perspective views of the base housing 12 on the left side of the projector 1. FIG. 10A is a perspective view of the base housing 12, as viewed from above. FIG. 10B is an enlarged perspective view of a portion of the base housing 12 including an area β of FIG. 10A, as viewed obliquely from below.

As illustrated in FIGS. 10A and 10B, the left intake section 51, which takes air into the first-story portion, is provided on the left side of the projector 1, and the right intake section 52, which takes air into the first-story portion, is provided on the right side of the projector 1. The left intake section 51 and the right intake section 52 serve as intake devices. The air passes through the left intake section 51, as indicated by arrow A2 in FIGS. 10A and 10B. Then, the air enters the first-story portion, and reaches a space under the light source holding portion 81 that holds the light source device 4 in the second-story portion of the base housing 12, as indicated by arrow A21 in FIG. 10B.

FIGS. 11A and 11B are perspective views of the base housing 12 on the right side of the projector 1. FIG. 11A is a perspective view of the base housing 12, as viewed from above. FIG. 11B is an enlarged perspective view of a portion of the base housing 12 including an area γ of FIG. 11A, as viewed obliquely from below. As illustrated in FIGS. 11A and 11B, air passes through the right intake section 52, as indicated by arrow A3 in FIGS. 11A and 11B. Then, the air enters the first-story portion, and reaches the space under the light source holding portion 81.

As illustrated in FIGS. 10A and 10B and FIGS. 11A and 11B, the base housing 12 includes the left intake section 51 and the right intake section 52 on the left side and the right side thereof, respectively. Cooling airflows taken in through the left intake section 51 and the right intake section 52 reach the space under the light source holding portion 81, as described above, and merge in the space.

As illustrated in FIGS. 10A and 10B, left and right portions of the light source holding portion 81 are provided with a left ventilation portion 121a and a right ventilation portion 121b, respectively, which form ventilation openings communicating with the first-story portion and the second-story portion divided by the base housing 12. Through the left ventilation portion 121a and the right ventilation portion 121b, the cooling airflows having merged in the space under the light source holding portion 81 enter the second-story portion, as indicated by arrows A4 and A5 in FIG. 10A and FIG. 11A.

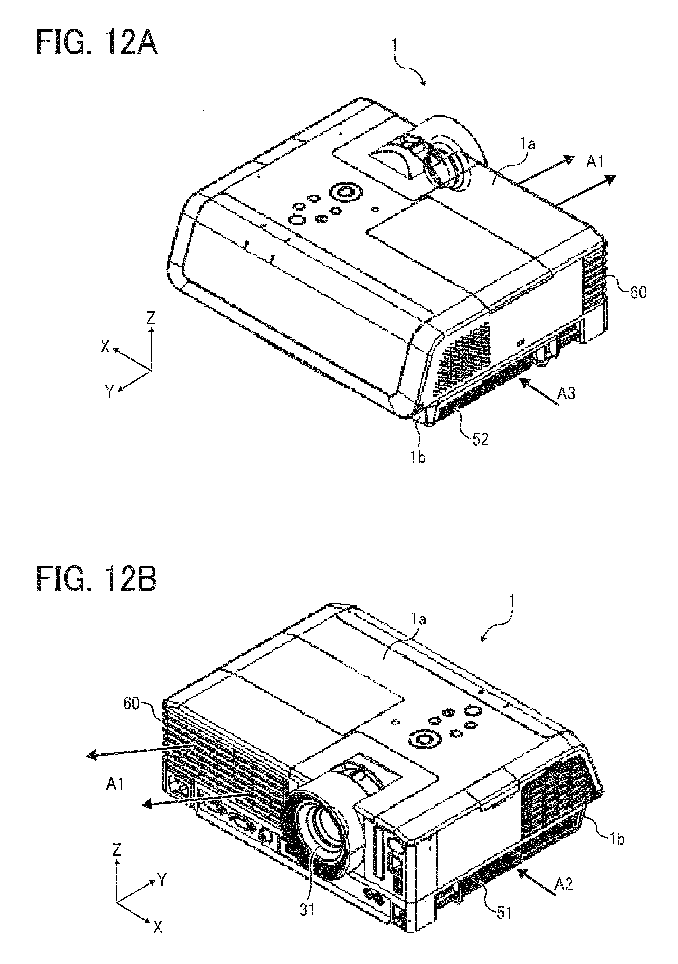

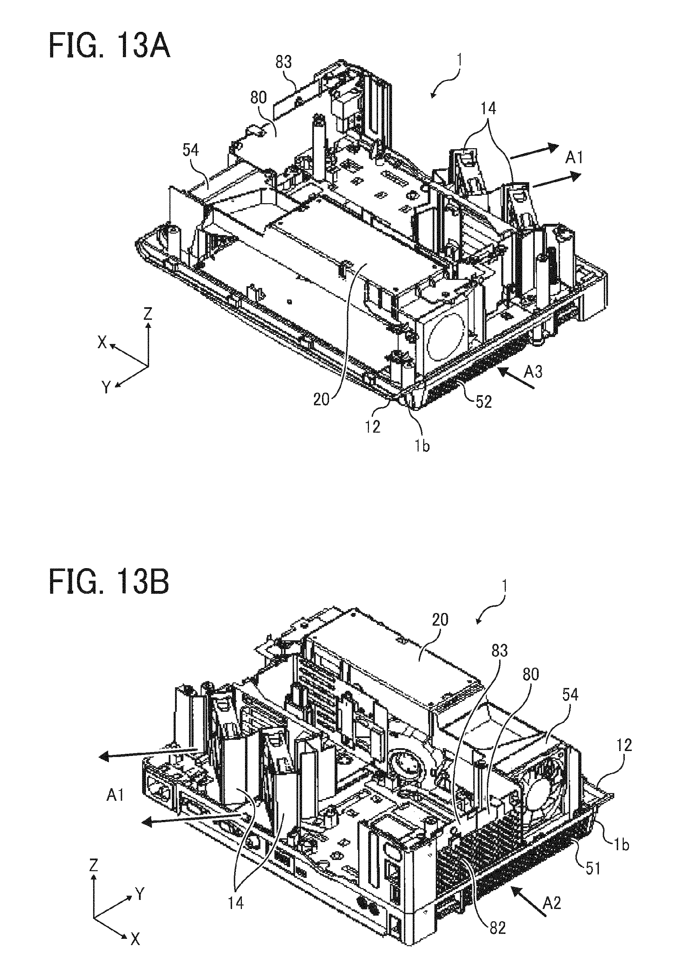

FIGS. 12A and 12B and FIGS. 13A and 13B illustrate airflows in the entire projector 1. FIGS. 12A and 12B are perspective views of the projector 1 attached with the upper outer cover 1a and the lower outer cover 1b. FIG. 12A is a perspective view of the rear side of the projector 1. FIG. 12B is a perspective view of the front side of the projector 1. FIGS. 13A and 13B are perspective views of the projector 1, in which the upper outer cover 1a, the optical device 3, and the light source device 4 are removed. FIG. 13A is a perspective view of the rear side of the projector 1. FIG. 13B is a perspective view of the front side of the projector 1.

As described above, the left side and the right side of the projector 1 substantially perpendicular to the projection surface of the projector 1 include the left intake section 51 and the right intake section 52, respectively, which take in air from outside the projector 1. Through the left intake section 51 and the right intake section 52, outside airflows flow into the first-story portion formed by the base housing 12 and housing the printed circuit board 13. The airflows then merge in the space under the light source holding portion 81, flow into the second-story portion formed by the base housing 12 through the left ventilation portion 121a and the right ventilation portion 121b provided in the light source holding portion 81, and are exhausted outside the projector 1. The projector 1 has flow paths through which the airflows flow in the above-described manner. With the configuration having such flow paths, outside airflows of relatively low temperature flow into the first-story portion housing the printed circuit board 13. Accordingly, an increase in temperature of the printed circuit board 13 is prevented.

Further, the outside cooling airflows flow into the first-story portion from the left and right sides of the projector 1, merge in the space below the light source device 4 having a relatively high temperature, flow into the second-story portion through the left ventilation portion 121a and the right ventilation portion 121b of the base housing 12, and are exhausted outside the projector 1 by the ventilation fans 14 (i.e., exhaust devices) illustrated in FIGS. 13A and 13B. Thus, the printed circuit board 13 is upstream of the light source device 4 in the airflow direction. Accordingly, the air heated by the light source device 4 is prevented from reaching the printed circuit board 13 and transferring the heat thereof to the printed circuit board 13.

As described above, due to the presence of the base housing 12 as a wall between the light source device 4 and the printed circuit board 13 and the cooling effect of the cooling air, radiant and conductive heat from the light source device 4 is blocked, and thus an increase in temperature of the printed circuit board 13 is reliably prevented.

As illustrated in FIGS. 1A and 1B, FIG. 2A, and FIG. 13A and 13B, the upper intake section 53 and the upper intake fan 54 which take outside air into the second-story portion are provided on the left side of the projector 1.

For more effective use of the space on the above-described meeting table 42 serving as a stand, it is desirable to reduce the size of the projector 1 serving as an image projection apparatus. A reduction in size of the projector 1, however, increases the density of internal modules. As a result, a module such as a circuit board having a relatively low heat resistant temperature and located relatively close to the light source device 4 acting as a heat source is increased in temperature.

To reduce the size and weight of the image projection apparatus, the image projection apparatus may be configured such that air flows through a gap between an outer cover and an optical device, and that an internal module and the inner surface of the outer cover are in contact with each other to maintain the strength of the outer cover. This configuration cools an illumination system by using the gap between the outer cover and the optical device as an air duct. In the thus configured image projection apparatus, however, radiant heat from a light source device acting as a heat source may be transferred to another module and cause an increase in temperature of a circuit board.

Meanwhile, the projector 1 of the present embodiment prevents the radiant and conductive heat from the light source device 4 from increasing the temperature of the printed circuit board 13. Accordingly, an increase in temperature of the printed circuit board 13 is reliably prevented.

In the projector 1, the network substrate 80 for wirelessly communicating with an external device is disposed on the right side of the projection lenses 31 in FIG. 2A and FIG. 8A, for example. The network substrate 80 includes the antenna unit 83. The antenna unit 83 performs information communication to input and output information with an external device, such as a personal computer. A surface of the network substrate 80 on the side of the projection surface of the projector 1 includes the side connector unit 70 including the LAN connector unit 72 and the second USB terminal 71 illustrated in FIG. 4. Further, a surface of the network substrate 80 on the side of the left surface of the projector 1 includes the electromagnetic shielding member 82 to prevent external electromagnetic radiation from the network substrate 80.

Although it is desirable to prevent heat transfer from the light source device 4 to the network substrate 80, it is difficult to dispose the network substrate 80 in the first-story portion because of the limitation of space. In the projector 1, therefore, the network substrate 80 is disposed in the second-story portion at a position opposite to the light source device 4 across the projection lenses 31. With the interposition of the projection lenses 31, the heat of the light source device 4 is prevented from being transferred to the network substrate 80.

Further, as illustrated in FIG. 2A and FIG. 8A, for example, the power supply substrate 20 is disposed inside the rear surface of the projector 1. The power supply substrate 20 is a device which transmits the power input from the power input unit 110 illustrated in FIG. 4 to respective devices included in the projector 1. The power supply substrate 20 has a predetermined length. One end portion of the power supply substrate 20 in the long axis direction thereof forms an output unit, and the other end portion of the power supply substrate 20 in the long axis direction forms an input unit.

It is preferable that the output unit of the power supply substrate 20 is located near the network substrate 80. Therefore, the end portion of the power supply substrate 20 on the right side in FIG. 8A serves as the output unit, and the other end portion of the power supply substrate 20 on the left side in FIG. 8A serves as the input unit. It is preferable that the input unit of the power supply substrate 20 is located near the power input unit 110. In the layout of the present embodiment, therefore, the power input unit 110 is disposed near the right side of the projector 1, i.e., near the input unit of the power supply substrate 20, and is located below the light source device 4 acting as a heat source.

As described above, the network substrate 80 desired to be located distant from the light source device 4 is disposed near the left side of the projector 1. Further, since the output unit of the power supply substrate 20 is preferred to be near the network substrate 80, the input unit of the power supply substrate 20 corresponding to the other end portion in the long axis direction of the power supply substrate 20 is disposed near the right side of the projector 1. The power input unit 110 preferred to be near the input unit of the power supply substrate 20 is also disposed near the right side of the projector 1. This layout allows a reduction in overall size of the projector 1, while preventing an increase in temperature of the network substrate 80.

As illustrated in FIG. 6, the projector 1 of the above-described embodiment is configured to project the projection light L on the screen 2 located above the lens center horizontal plane S. Alternatively, the projector 1 may be configured to project the projection light L on the screen 2, a part of which is located below the lens center horizontal plane S, as long as the cables connected to the input-output connector unit 11 are positioned not to block the projection light L.

In the above-described embodiment, description has been given of a use example in which the projector 1 is placed on a stand, with the bottom surface 101 of the projector 1 kept in contact with the stand. Alternatively, the projector 1 of the present embodiment may be fixed upside down to an upper plane, such as a ceiling. In this case, the bottom surface 101 of the projector 1 is brought into contact with the upper plane, and then is fixed thereto by fixing devices, such as screws or fittings. Further, in this case, the cables connected to the input-output connector unit 11 are fixed to and extends along the upper plane, to which the bottom surface 101 is fixed, so as not to hang below the lens center horizontal plane S.

The above-described embodiments and effects thereof are illustrative only and do not limit the present invention. Thus, numerous additional modifications and variations are possible in light of the above teachings. For example, elements or features of different illustrative and embodiments herein may be combined with or substituted for each other within the scope of this disclosure and the appended claims. Further, features of components of the embodiments, such as number, position, and shape, are not limited to those of the disclosed embodiments and thus may be set as preferred. It is therefore to be understood that, within the scope of the appended claims, the disclosure of the present invention may be practiced otherwise than as specifically described herein.

## Claims

1. An image projection apparatus (1) **characterized by** comprising:
a light source (4) configured to emit light;
an image forming unit (10) configured to form an image with the emitted light;
a projection optical unit (31) provided on an outer surface of the image projection apparatus (1) closest to an external projection plane, and configured to project the formed image onto the external projection plane as projection light;
a bottom surface (101) configured to be fixed to an external installation site to be substantially parallel thereto; and
an external connection unit (11) provided on the outer surface of the image projection apparatus (1) closest to the external projection plane, on the same side as the bottom surface (101) across a virtual horizontal plane passing through the center of the projection optical unit (31), and configured to be connected to a connection line for connection with an external device.

2. The image projection apparatus (1) according to claim 1, further **characterized by** comprising:
a circuit board (13) including the external connection unit (11), and disposed substantially parallel to the virtual horizontal plane.

3. The image projection apparatus (1) according to claim 1 or 2, further **characterized by** comprising:
a circuit board (13) including the external connection unit (11), and disposed substantially parallel to the virtual horizontal plane; and
a dividing member (12) configured to divide the internal space of the image projection apparatus into first and second compartments substantially parallel to the virtual horizontal plane,
**characterized in that** the circuit board (13) is disposed in the first compartment, and the light source (4), the image forming unit (10), and the projection optical unit (31) are disposed in the second compartment.

4. The image projection apparatus (1) according to claim 3, further **characterized by** comprising:
an intake device (51, 52) configured to take outside air into the first compartment; and
an exhaust device (14, 60) configured to exhaust air from the second compartment to the outside of the image projection apparatus (1),
**characterized in that** the dividing member (12) includes a ventilation opening (121a, 121b) formed in the vicinity of the light source (4) to allow air to flow from the first compartment to the second compartment.
